# EUROPEAN PATENT APPLICATION

(11) **EP 1 863 265 A1**
(43) Date of publication of application: **05.12.2007**
(21) Application number: 05727037.3
(22) Date of filing: 22.03.2005
(51) Int. Cl.: H04M 11/00, H04M 3/00

(54) **TELEPHONE APPARATUS**

(71) Applicant: FUJITSU LIMITED, Kawasaki-shi, Kanagawa 211-8588 (JP)
(72) Inventor: TSUJINO, Yasukazu, c/o FUJITSU KANSAI-CHUBU, Osaka-shi, Osaka 5400001 (JP); SUGIHASHI, Hideyuki, c/o FUJITSU KANSAI-CHUBU, Osaka-shi, Osaka 540001 (JP); YAMAMOTO, Kiyoko, c/o FUJITSU KANSAI-CHUBU, Osaka-shi, Osaka 5400001 (JP)
(74) Representative: HOFFMANN EITLE
(86) International application number: PCT/JP2005/005120
(87) International publication number: WO 2006/100751

(57) **Abstract**

The object is to realize a multi-line service with proprietary messages/procedures only between telephone apparatuses such as IP telephones, and to use a connection management server complying with a standard connection protocol without using proprietary messages/procedures between the connection management server such as the SIP server and the telephone apparatus. A telephone apparatus for performing a telephone call using a predetermined communication protocol and a connection protocol, includes: means for mutually reporting a line status using a proprietary interface different from the connection protocol between the telephone apparatus and another telephone apparatus forming a multi-line group.

## Description

### TECHNICAL FIELD

The present invention relates to a telephone apparatus such as an IP (Internet Protocol) telephone and the like supporting SIP (Session Initiation Protocol).

### BACKGROUND ART

As conventional telephone systems based on circuit switching, there are many telephone systems including a multi-line service function for accommodating line (prime lines) mainly used by own terminals and prime lines of other terminals (other lines), and specifying a line to be used by operation using a button and the like. The function is indispensable for a business place accommodating a plurality of lines. For responding to such needs, an IP telephone system, supporting SIP, having the multi-line service function is proposed.

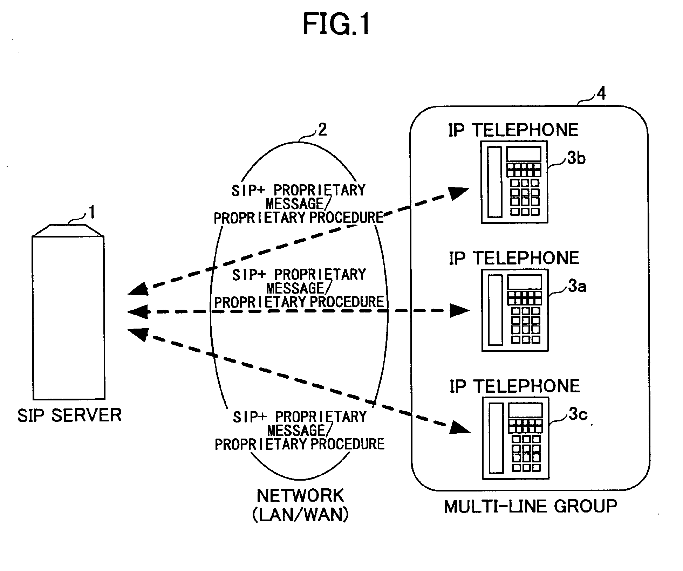

Fig.1 is a schematic diagram showing a conventional multi-line service using SIP. In the system, IP telephones 3a-3c are connected to a SIP server 1 via a network 2 such as a LAN (Local Area Network) / WAN (Wide Area Network), and the IP telephones 3a-3c form a multi-line group 4. In the conventional system, the multi-line service function is realized by communications using proprietary messages or proprietary procedures in addition to standard SIP messages between the SIP server 1 and each of the IP telephones 3a-3c that are SIP user agents.

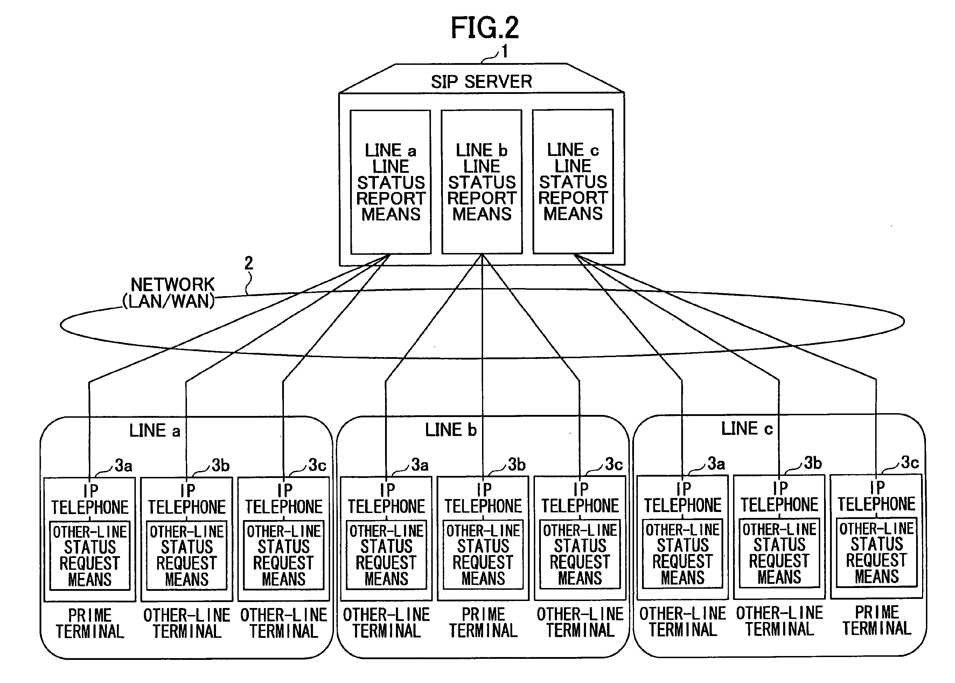

Fig.2 is a diagram showing a conventional system configuration example focusing on realization means. The SIP server 1 includes a line status report means for reporting line status of each line a - c, and each of the IP telephones 3a-3c that are SIP user agents includes an other-line status request unit for requesting reporting of other-line status.

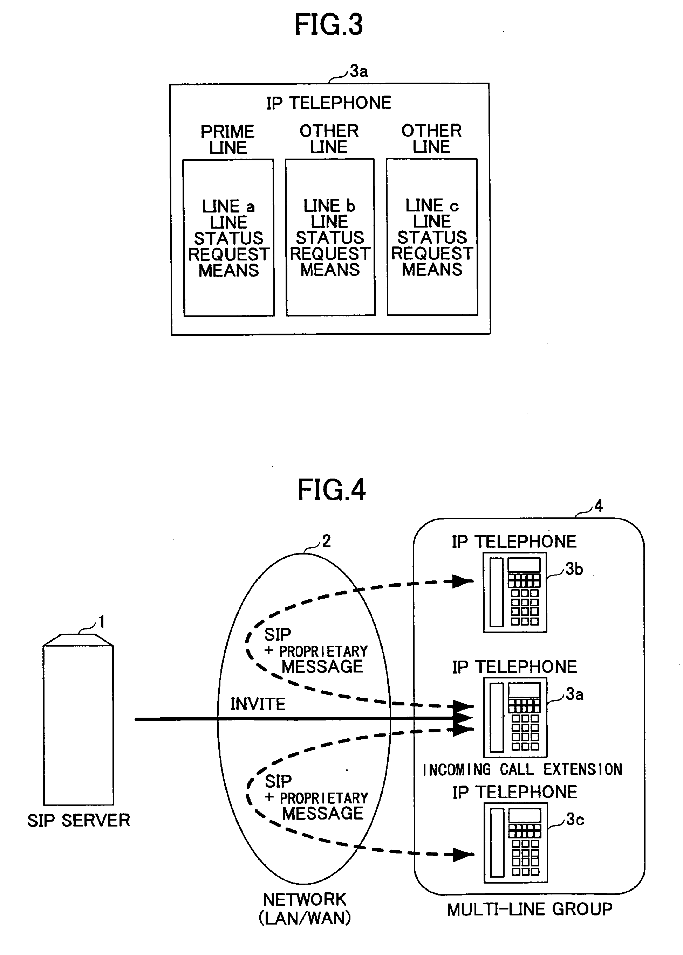

Fig.3 is a diagram showing a configuration example of the SIP user agent focusing on an IP telephone. For example, the IP telephone 3a includes a line status request means, for each of the lines a - c, for obtaining accommodating line information from the SIP server 1.

Following patent documents 1 and 2 disclose techniques in which control for incoming call in an IP telephone is performed by a function of a main apparatus (corresponding to the SIP server).
[Patent document 1] Japanese Laid-Open Patent application No.2003-283658
[Patent document 2] Japanese Laid-Open Patent application No.2004-266437

### DISCLOSURE OF THE INVENTION

### PROBLEM TO BE SOLVED BY THE INVENTION

As described above, according to the conventional IP telephone, the SIP server includes the line status report means for reporting line status of each line, and the multi-line service function is realized by communications using proprietary messages or proprietary procedures in addition to the standard SIP messages. Therefore, there are following problems.

First, developments are necessary for both of the SIP server and the IP telephone for realizing the multi-line service function. Thus, development cost increases.

Second, since proprietary messages/procedures are included in messages/procedures from the SIP server, connectivity to other SIP user agents that are not used for the multi-line service is lowered.

Third, a user who want to use the multi-line service needs to install a SIP server having a multi-line service function. But, since a SIP server supporting the proprietary messages/procedures provided in the IP telephone becomes necessary, choices of apparatuses are limited. In addition, since the user cannot use a already owned SIP server or an inexpensive SIP server, system construction cost increases.

Fourth, when increasing or removing terminals supporting the multi-line service, data setting change is necessary also in the SIP server for controlling the multi-line service. Thus, service change cannot be performed easily.

The present invention is contrived in view of the above-mentioned problems, and an object is to provide a telephone apparatus that can realize a multi-line service with proprietary messages/procedures only between telephone apparatuses such as IP telephones, and that can use a connection management server complying with a standard connection protocol without using proprietary messages/procedures between the connection management server such as a SIP server and the telephone apparatus.

### MEANS FOR SOLVING THE PROBLEM

For solving the above-mentioned problem, in the present invention, a telephone apparatus for performing a telephone call using a predetermined communication protocol and a connection protocol, includes: means for mutually reporting a line status using a proprietary interface different from the connection protocol between the telephone apparatus and another telephone apparatus forming a multi-line group. That is, the problem is intended to be solved by sending and receiving a proprietary message for controlling the multi-line service only between telephone apparatuses.

### EFFECT OF THE INVENTION

According to the telephone apparatus of the present invention, since it becomes possible to realize the multi-line service using the proprietary message/procedure only between telephone apparatuses such as IP telephones and the like, the system can be constructed using a connection management server such as a SIP server (standard SIP server) and the like for supporting only the RFC/internet drafts relating to SIP.

### BRIEF DESCRIPTION OF THE DRAWINGS

Fig.1 is a schematic diagram showing a conventional multi-line service using SIP;
Fig.2 is a diagram showing a conventional system configuration example focusing on realization means;
Fig.3 is a diagram showing a configuration example of a SIP user agent focusing on one IP telephone;
Fig.4 is a schematic diagram when there is an incoming call to an IP telephone in the present invention;
Fig.5 is a schematic diagram when there is a call origination from the IP telephone;
Fig.6 is a schematic diagram when call holding/holding and response is performed from an IP telephone in the present invention;
Fig.7 is a diagram showing an example of a system configuration of the present invention focusing on realizing means;
Fig.8 is a diagram showing a configuration example of the inside of a SIP user agent focusing on one IP telephone;
Fig.9 is a block diagram of the IP telephone;
Fig.10 is a diagram showing an example of control data;
Fig.11 is a diagram showing a concrete example of control data;
Fig.12 is a diagram showing a restart sequence example (1);
Fig.13 is a diagram showing a restart sequence example (2);
Fig.14 is a diagram showing a restart sequence example (3);
Fig.15 is a diagram showing a sequence example of leavening from/ participating in the multi-line group;
Fig.16 is a diagram showing a sequence example of receipt rejection due to exceeding maximum number of report destinations;
Fig.17 is a diagram showing a sequence example of participation authentication;
Fig.18 is a diagram showing a call incoming sequence example;
Fig.19 is a diagram showing a call originating sequence example;
Fig.20A is a diagram showing line holding and response sequence example (1);
Fig.20B is a diagram showing line holding and response sequence example (2).

### Description of reference signs

- 1: SIP server
- 2: network
- 3, 3a-3c: IP telephone
- 4: multi-line group
- 50: call control unit
- 51: multi-line control unit
- 52: RTP control unit
- 53: SIP protocol control unit
- 54: input/output interface unit
- 55: LAN interface unit
- 56: data management unit
- 60: terminal management data
- 61: function button management table
- 62: function button status management table
- 63: multi-line management table
- 7: part server

### PREFERRED EMBODIMENTS FOR CARRYING OUT THE INVENTION

In the following, preferred embodiments of the present invention are described in detail.

### <Principle of operation>

Fig.4 is a schematic view when there is an incoming call to an IP telephone in the present invention. IP telephones 3a-3c are connected to the SIP server 1 via a network 2 such as LAN/WAN, and it is assumed that the IP telephones 3a-3c form a multi-line group 4. When there is an incoming call at the IP telephone 3a from the SIP server 1, the IP telephone 3a reports the incoming call to the IP telephones 3b and 3c using a proprietary message so that multi-line call incoming processing is realized.

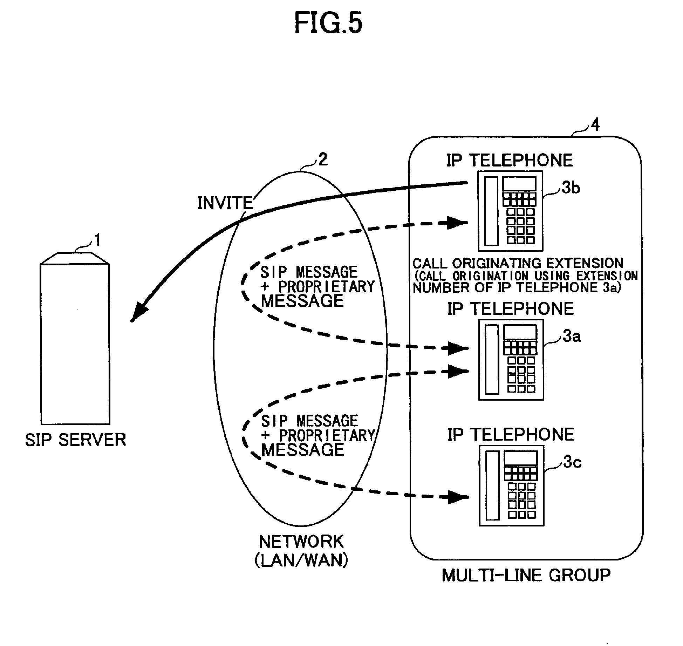

Fig.5 is a schematic diagram when originating a call from the IP telephone in the present invention. When the IP telephone 3b originates a call using a prime line (line "a") of the IP telephone 3a, the IP telephone 3b reports the use of the line "a" to the IP telephone 3a, and the IP telephone 3a reports it to the IP telephone 3c so that multi-line origination processing is realized.

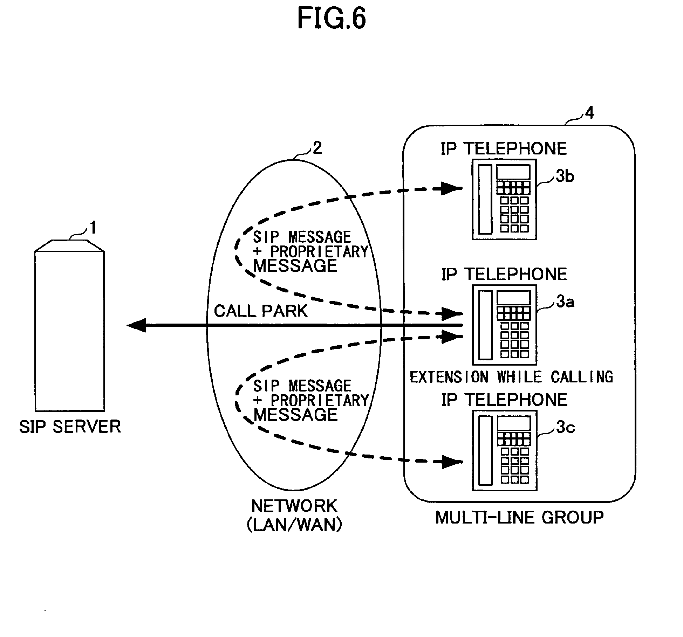

Fig.6 is a schematic diagram when call holding/holding and response is performed by an IP telephone in the present invention. When the IP telephone 3b performs call holding from calling, the IP telephone 3b reports call holding to the IP telephone 3a using a proprietary message to the IP telephone 3a, and the IP telephone 3a reports it to the IP telephone 3c. According to a response by the IP telephone 3a, the response is reported by a proprietary message so that holding and response processing is realized.

As mentioned above, proprietary procedures/messages are not included between the SIP server 1 and IP telephones 3a-3c, but proprietary procedure is used among the IP telephones 3a-3c so that the problem is solved.

### <System configuration>

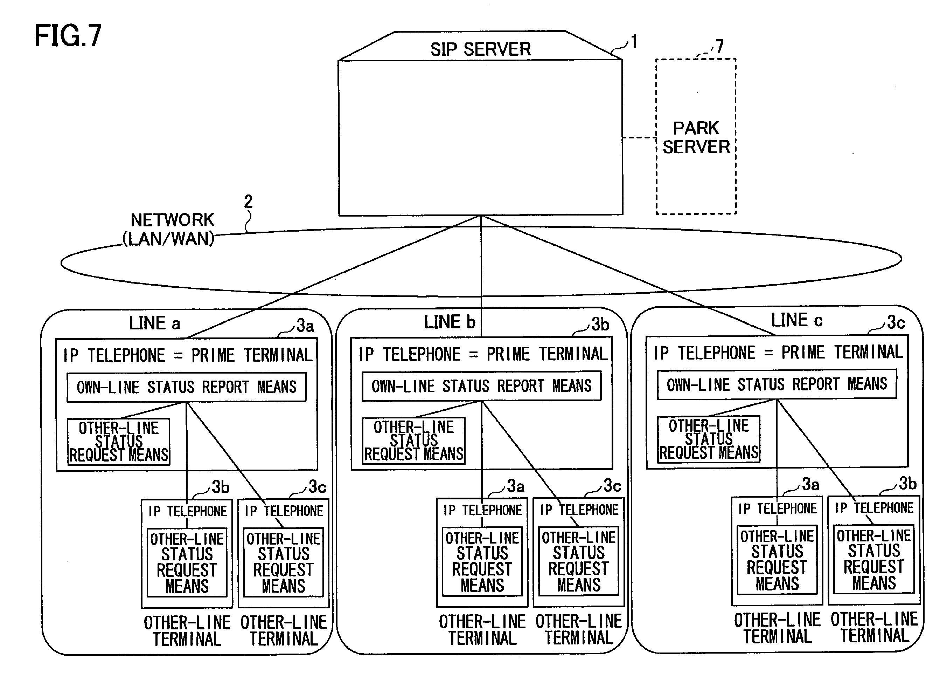

Fig.7 is a diagram showing an example of a system configuration of the present invention focusing on realization means. The SIP server 1 is configured by a SIP server (standard SIP server) only supporting RFC/Internet drafts related to SIP, and the SIP server 1 manages prime lines as normal lines and does not recognize whether the lines form the multi-lines. In addition, as necessary, a park server 7 is provided as necessary for performing line holding. Each of the IP telephones 3a-3c includes an own-line status report means for reporting a status of a prime line of the own apparatus and an other-line status request means.

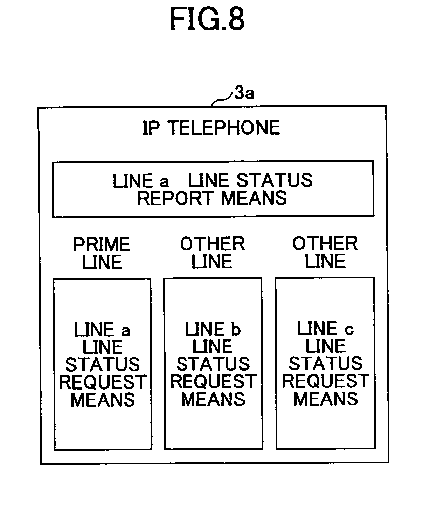

Fig.8 is a diagram showing a configuration example of the inside of a SIP user agent focusing on one of the IP telephones. Although the figure shows the IP telephone 3a, in the inside of each IP telephone, there are a line status report means (own-line status report means) for a prime line, and a line status request means (other-line status request means) for obtaining other line information for each line. In this example, by further providing the line status request means also for the prime line in the IP telephone, it is realized to use the line status request means as a component.

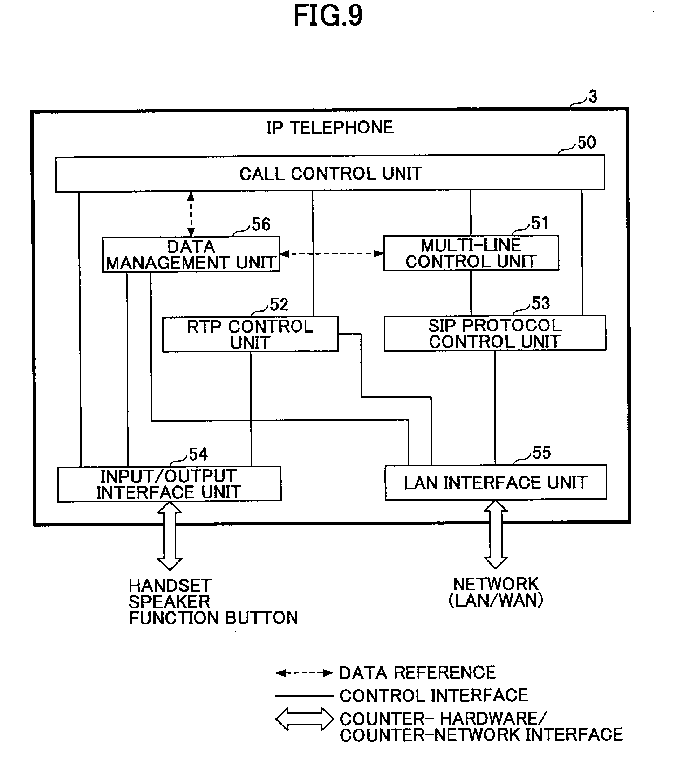

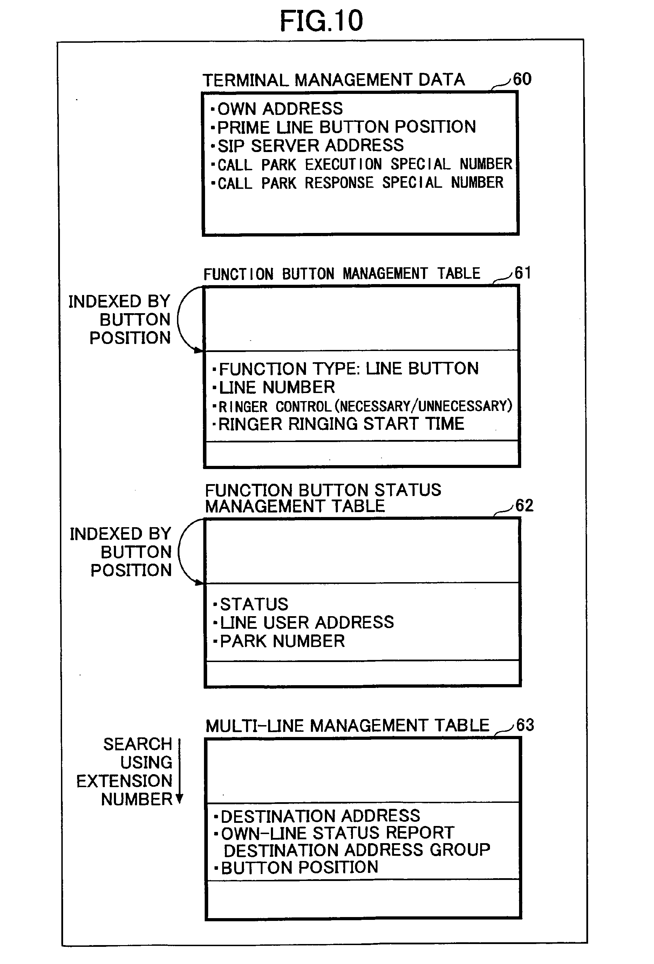

Fig.9 is a block diagram of the IP telephone. Each of the IP telephones 3 (3a-3c) includes a call control unit 50, a multi-line control unit 51, a RTP (Real-time Transport Protocol) control unit 52, a SIP protocol control unit 53, an input/output interface unit 54, a LAN interface unit 55 and a data management unit 56. In addition, as shown in Fig.10, the data management unit 56 includes, as control data, a terminal management data 60, a function button management table 61, a function button status management table 62 and a multi-line management table 63.

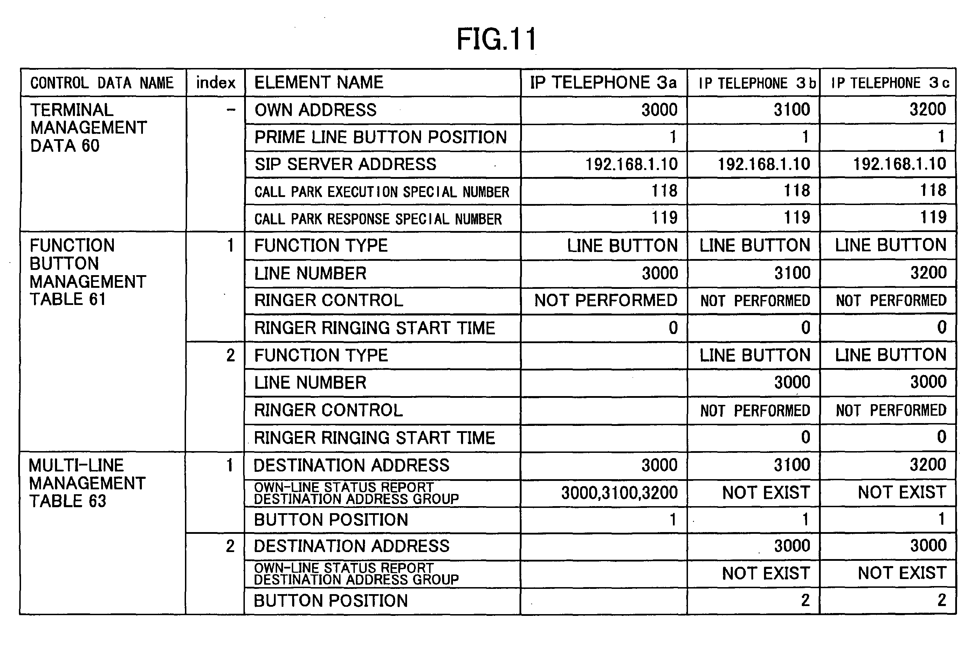

In a process for registering the control data, in Fig.9, command data that is issued via a network or issued by button operation of the IP telephone, is reported to the data management unit 56 via the LAN interface 55 or the input/output interface unit 54. The data management unit 56 registers the input data in the terminal management data 60, the function button management table 61 and the multi-line management table 63. Fig.11 shows a concrete example of each control data of the IP telephones 3a, 3b and 3c when registering a line 3000. In this example, since the function button status management table 62 is dynamic control data and is not a subject for registration by a command, it is not included in Fig.11. In addition, in Fig.11, an own-line status report destination address group of the multi-line management table 63 indicates a status after completion of line status report request from the IP telephones 3b and 3c.

### <Restart sequence>

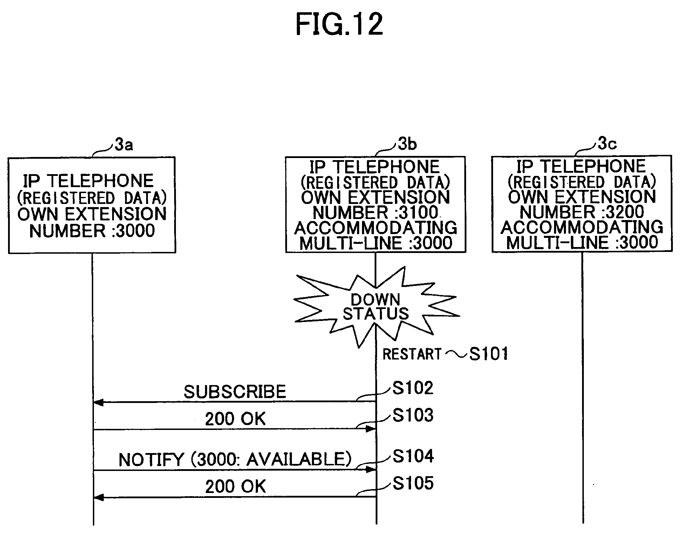

Figs.12-14 shows restart sequence examples.

In Figs.12-14, the IP telephone 3a is a prime terminal for the line 3000, and the line 3000 is registered in the IP telephones 3b and 3c as an other-line using a means such as a command and the like.

In addition, in each figure, SUBSCRIBE, NOTIFY and MESSAGE methods that are defined in SIMPLE (SIP for Instant Messaging and Presence Leveraging Extensions) are used as concrete realization examples for the own-line status report means and the other-line status request means. The SIMPLE is shown in the Internet standards of IETF such as RFC3856.

Fig.12 shows a restart sequence of the IP telephone 3b that accommodates an other-line. When restart from a down status completes (step S101), the IP telephone 3b inquires a line status of the IP telephone 3a using the other-line status request means (steps S102 and S103). The IP telephone 3a that receives the inquiry reports a newest line status of the line 3000 using the own-line status report means (steps S104 and S105). At this time, since the status of the line 3000 is not changed, the line status is reported only to the IP telephone 3b that sent the inquiry.

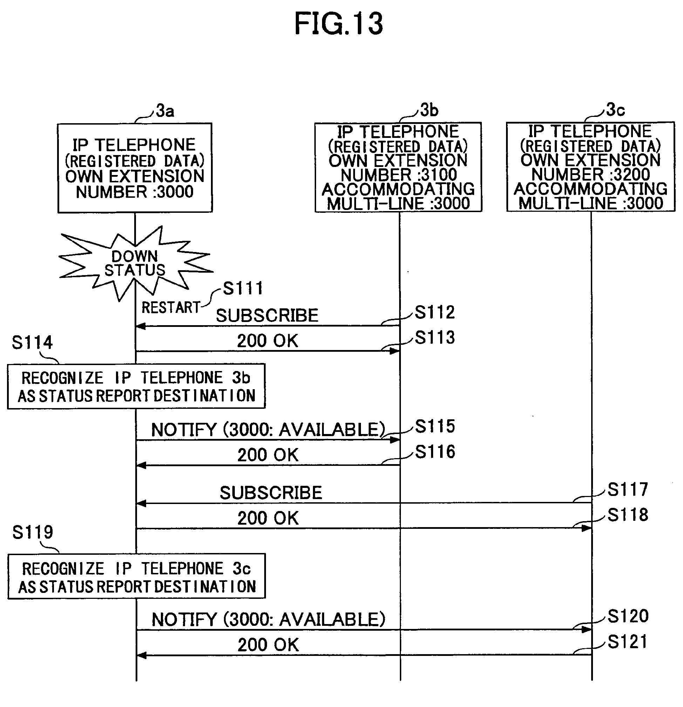

Fig.13 shows a restart sequence of the IP telephone 3a that is a prime terminal including a report destination dynamic generation scheme. The IP telephone 3a initializes other-line information for which status change of the line 3000 should be reported when restart occurs (step S111). On the other hand, each of the IP telephones 3b and 3c that accommodates the other-line periodically performs the other-line status request means (steps S112 and S113, and steps S117 and S118), and the IP telephone 3a includes a function for refreshing status report destination information of the line 3000 by recognizing the source of the request as a status report destination (steps S114 and S119). Accordingly, after a predetermined time elapses from the completion of the restart of the IP telephone 3a, other-line information in the IP telephone 3a is reconstructed. Since it is a voluntary participation scheme from the other-line, a restart occurrence report means from the prime terminal side using multicast or broadcast is not necessary. Thus, the multi-line service can be provided even when a prime terminal and other terminals are placed on different networks.

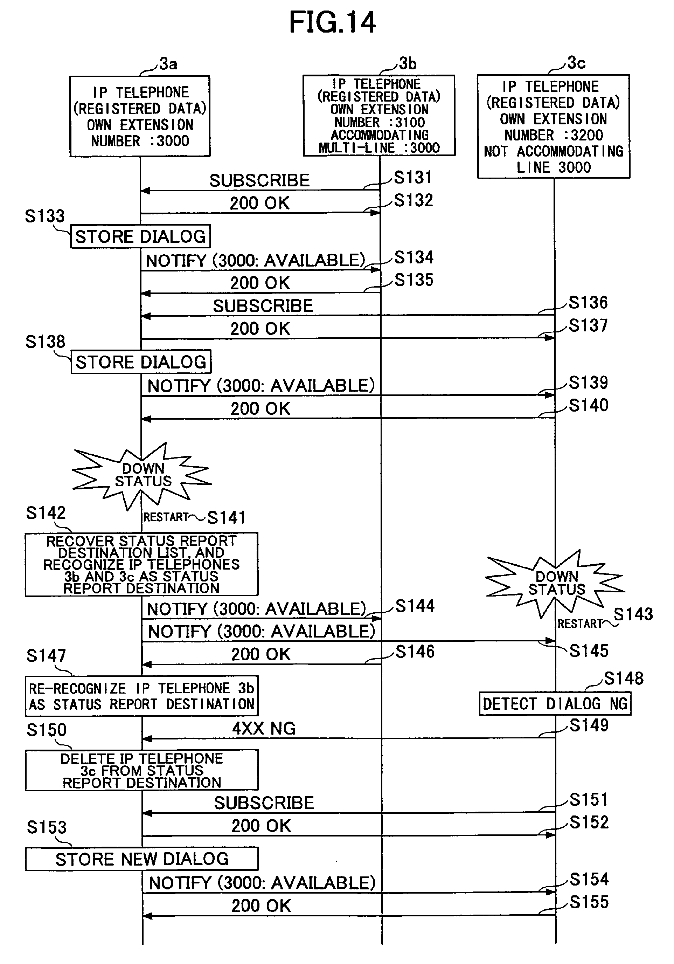

Fig.14 shows a restart sequence of the IP telephone 3a that is a prime terminal including a report destination dynamic correction scheme. The IP telephone 3a stores, in the own-line status report means, information necessary for reporting status change as information that is not initialized when restarting using a nonvolatile memory etc.. In the example in Fig.14, when SUBSCRIBE is received Steps S131 and S132, steps S136 and S137), dialog information of it is stored (step S133, step S138). The IP telephone 3a restarts in a state in which dialog information for the IP telephone 3b and IP telephone 3c are stored (step S141).

The IP telephone 3a reports line status based on dialog information that is recovered from the storage (step S142) when restart occurs (steps S144 and S145), so that the IP telephone 3a quickly synchronizes line status stored in each other-line terminal with the status managed in the prime terminal. If restart occurs also in the IP terminal 3c when performing synchronization (step S143) so that dialog information stored in the IP telephone 3a is invalidated, the other-line status request means in the IP telephone 3c returns NG for the line status request from the IP telephone 3a (steps S148 and S149). The IP telephone 3a that receives NG updates (deletes) the stored dialog information (step S150), and does not perform line status report until receiving a new line status report request from the IP telephone 3c after that. When it receives a new line status report request from the IP telephone 3c (steps S151 and S152), a new dialog is stored (step S153) and line status report is performed (steps S154 and S155).

Accordingly, even though a refresh period is set to be long due to reasons for decreasing network load, for example, problem occurrence such as duplicate use of a line due to unmatched status can be avoided.

Operation of the restart sequence based on the functional block shown in Fig.9 is as follows.

Processes are described when the IP telephone 3b that accommodates the line 3000 as an other-line restarts. When restart completes, the multi-line control unit 51 generates a SUBSCRIBE message for every destination address registered in the multi-line management table 63 in the data management unit 56 to send the message via the SIP protocol control unit 53 and the LAN interface unit 55. The SUBSCRIBE message is reported to the SIP protocol control unit 53 and the multi-line control unit 51 via the LAN interface unit 55 in the IP telephone 3a that is a prime terminal of the line 3000. The multi-line control unit 51 searches the multi-line management table 63 of the data management unit 56 using a destination address of the SUBSCRIBE message, adds an address of the IP telephone 3b to the own-line status report address group of the line 3000 and generates a NOTIFY message for the IP telephone 3b to send it via the SIP protocol control unit 53 and the LAN interface unit 55. The NOTIFY message includes a current line status of the line that is obtained by searching the function button status management table 62 using button position information that is obtained from the multi-line management table 63 of the data management unit 56. The multi-line control unit 51 of the IP telephone 3b that receives the NOTIFY message searches the multi-line management table 63 using the line 3000 to extract the button position information, so that the multi-line control unit 51 searches the function button status management table 62 using the extracted button position information to set the received line status.

### <Leave and participate in multi-line group>

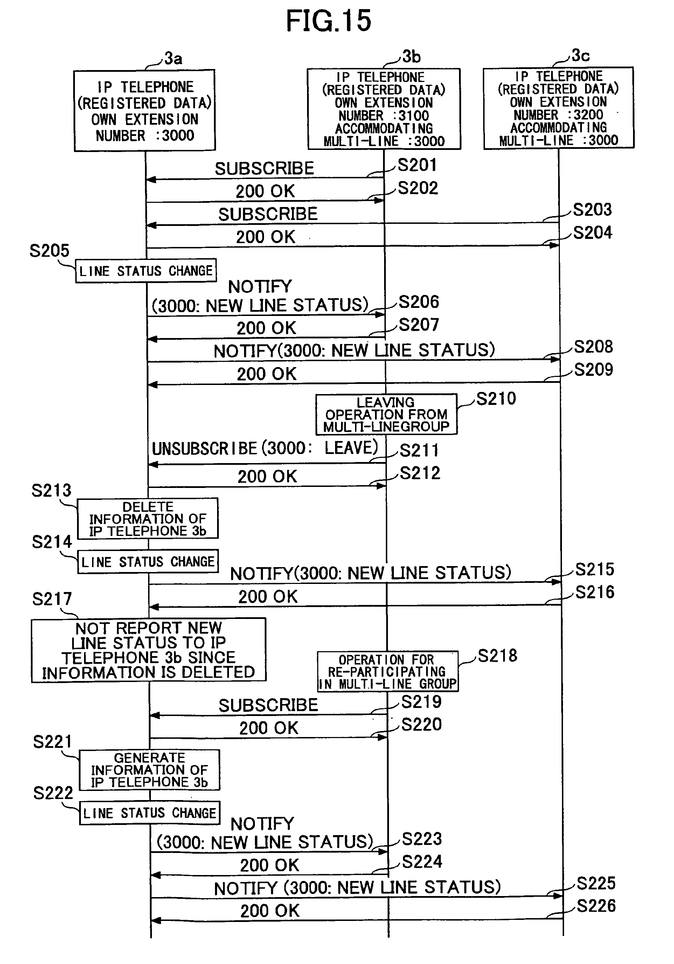

Fig.15 shows a sequence example showing leave / participate in the multi-line group. The IP telephone 3b including the other-line status request means includes a function for requesting to leave or participate in the multi-line group by button operation or command input or the like. When there is a leaving request from the IP telephone 3b that is a report destination terminal (steps S210-S212), the IP telephone 3a that is a prime terminal including the own-line status report means deletes information on the IP telephone 3b (step S213). When there is a participation request again (steps S218-S220), the IP telephone 3a regenerates information on the IP telephone 3b (step S221). The leaving request means is realized by an UNSUBSCRIBE method in the example of Fig.15.

Accordingly, services such as temporary leaving from seat by an operator and nighttime person change can be realized only by using the IP telephones.

### <Reception rejection due to exceeding maximum number of report destinations>

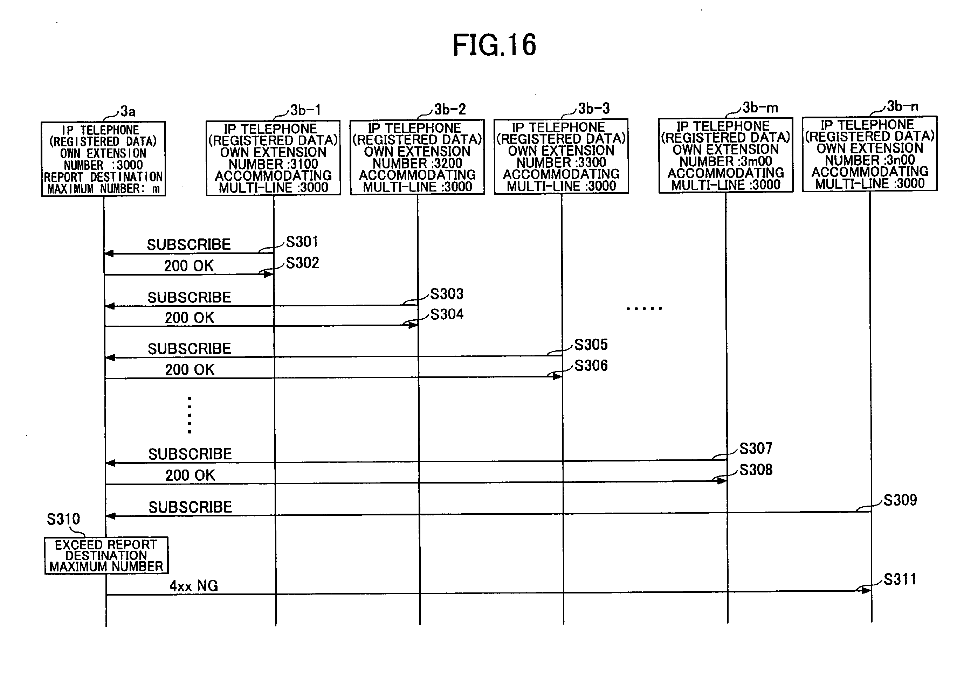

Fig.16 is a diagram showing a sequence example of receipt rejection due to exceeding maximum number of report destinations. A maximum number m of report destinations is registered in the IP terminal 3a that is a prime terminal having the own-line status report means beforehand by a means such as a command and the like. When receiving requests from IP telephone 3b group having the other-line status request means (steps S301-309) and when the number of requests exceeds the maximum number m of the report destinations (step S310), the IP telephone 3a rejects receipt by sending NG (step S311). Accordingly, a system configuration can be maintained according to processing capability.

### <Participation authentication>

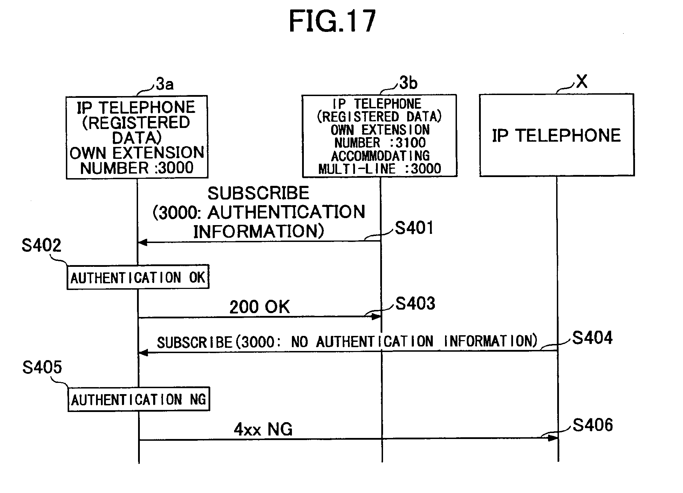

Fig.17 is a diagram showing a sequence example of participation authentication. The IP telephone 3a that is a prime terminal having the own-line status report means identifies authentication information on the line "a" beforehand by using a means such as a command. When requesting line status, the IP telephone 3b having the other-line status request means reports the authentication information on the line "a" to the IP telephone 3a that is the prime terminal (step S401). The IP telephone 3a that is the prime terminal examines the authentication information received from the IP telephone 3b. When it is determined to be correct authentication information (step S402), the IP telephone 3a sends OK (step S403) and adds it to report destinations of the own-line status report means. When there is a line status request from an IP telephone X for which correct authentication information is not known (step S404), correct authentication information is not determined (S405) so that NG is sent (step S406).

Accordingly, by adding only a terminal that sent correct authentication information to the report destinations of the own-line status report means, it can be prevented that an invalid terminal participates in the group.

### <Call incoming sequence>

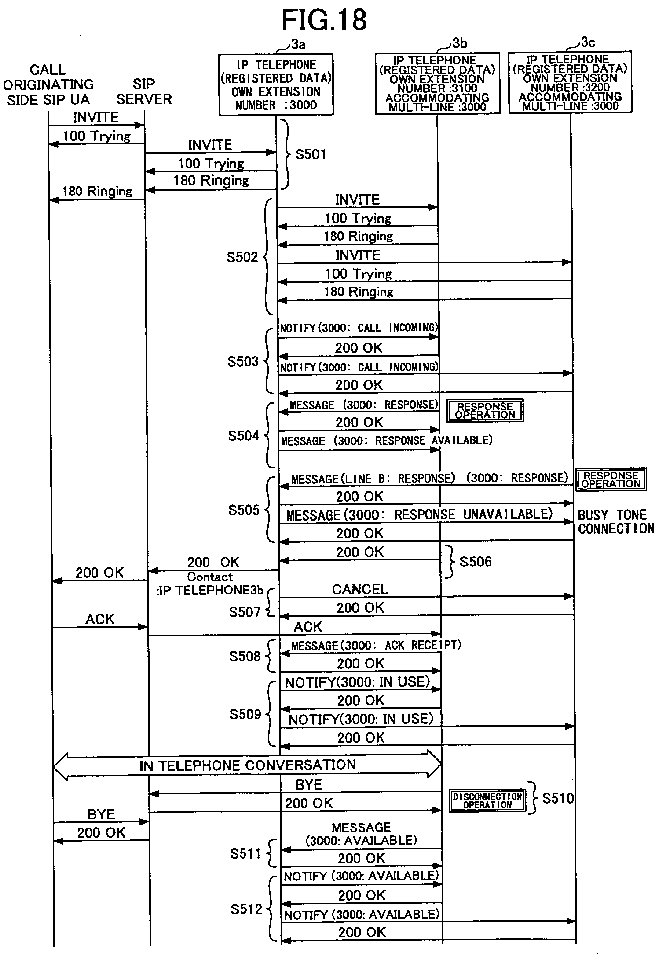

Fig.18 shows a call incoming sequence example. The IP telephone 3a that is the prime terminal that receives (step S501) an incoming call from the SIP server 1 branches an INVITE request to own-line status report destinations (step S502). In addition, the IP telephone 3a notifies the report destinations that the line status becomes "in call incoming" (step S503). IP telephones 3b and 3c that performs responding operation request the IP telephone 3a to respond. The IP telephone 3a determines a response terminal from among a plurality of responding requests and returns "response available" to the IP telephone 3b (step S504). In addition, the IP telephone 3a returns "response unavailable" to the IP telephone 3c for which response request is rejected(step S505).

The IP telephone 3b that receives the "response available" returns a response "200 OK" for the INVITE to the IP telephone 3a. The IP telephone 3a that receives "200 OK" returns, to the SIP server 1, a "200 OK" response in which an address of the responding IP telephone 3b is set in the Contact header (step S506). Accordingly, after that, a SIP message that arrives at the line "a" via the SIP server 1 directly arrives at the IP telephone 3b without passing through the IP telephone 3a.

In addition, the IP telephone 3a sends a CANCEL method to the other IP telephone 3c to cause it to stop the call incoming (step S507). The IP telephone 3b that is a response terminal receives ACK for the "200 OK" from the SIP server 1, and notifies the IP telephone 3a of receiving ACK (step S508). The IP telephone 3a that recognizes ACK reception notifies own-line status report destinations that the line status becomes "in use" (step S509).

When the SIP session ends due to end of conversation, the IP telephone 3b that is a response terminal notifies the IP telephone 3a that is a prime terminal that the line status becomes "available" (steps S510, S511). The IP telephone 3a that recognizes that the line status becomes "available" reports to the own-line status report destinations that the line status becomes "available" (step S512).

By the way, in the steps S502 and S503 in Fig.18, the branched own-line status report destinations include other-line status request means in the prime terminal, and responding operation is realized by the prime terminal by performing exchange of messages same as those of steps S504 and S505 in the prime terminal.

In addition, in step S503 in Fig.18, by adding a ringer ringing method to the "NOTIFY" message for each other-line terminal, ringing methods can be controlled for every other-line terminal from the prime terminal.

In the same way, in step S503 in Fig.18, by adding a ringer ringing start time to the "NOTIFY" message for each other-line terminal, operation becomes possible in which, for example, a ringer of the prime terminal is ringed by priority and a ringer of other-line terminals starts to ring when response is delayed.

In the same way, in step S502 in Fig.18, by controlling transmission timing of the INVITE message for each other-line terminal, operation becomes possible in which, for example, a ringer of a prime terminal is ringed by priority and a ringer of other-line terminals starts to ring when response is delayed.

Following is operation of the above-mentioned call incoming sequence according to the functional block shown in Fig.9.

Operation as the own-line status report means when call incoming to the line 3000 is performed is described. Incoming notification from the SIP server 1 to the line 3000 (INVITE request) is reported to the SIP protocol control unit 53 and the call control unit 50 via the LAN interface unit 55 of the IP telephone 3a. The call control unit 50 compares the own address of the terminal management data 60 in the data management unit 56 with a destination address of the INVITE address, and when they are same, the call control unit 50 extracts a prime line button position, searches the functional button status management table 62. When the line status is "available", the call control unit 50 changes it to "in call incoming" and passes the INVITE request message to the multi-line control unit 51 to report call incoming. When the line status is other than "available", the call control unit 50 recognizes "call incoming unavailable" and reports it to the SIP server 1.

The multi-line control unit 51 that receives the call incoming report searches the multi-line management table 63 of the data management unit 56 using a destination address of the INVITE request message to obtain an own line status report destination address group and to branch and distribute the INVITE request. The INVITE request is sent via the SIP protocol control unit 53 and the LAN interface unit 55. In addition, the multi-line control unit 51 generates a NOTIFY message for the own line status report destination address group, and send it via the SIP protocol control unit 53 and the LAN interface unit 55. The NOTIFY massage includes "in call incoming" as a line status of the line obtained by searching the function button status management table 62 using button position information obtained from the multi-line management table 63 of the data management unit 56.

Operation as the other-line status request means at the time of call incoming to the line 3000 is described. The INVITE request sent by the own-line status report means of the IP telephone 3a is reported to the SIP protocol control unit 53 and the call control unit 50 of the IP telephone 3b, 3c that is the other-line terminal via the LAN interface unit 55.

The call control unit 50 compares the own address in the terminal management data 60 of the data management unit 56 with a destination address of the INVITE request message. Since they are not the same, the call control unit 50 searches the multi-line management table 63 of the data management unit 56 using the destination address of the INVITE message, searches the function button status management table 62 of the data management unit 56 using extracted button position information, changes corresponding line status into "in call incoming", returns a "180 Ringing" message for the INVITE request, and rings the ringer.

When the address registered in the own line status report destination address group is the own terminal, each SIP message such as the INVITE request is passed from the own-line status report means to the other-line status request means in the multi-line control unit 51 so that call incoming to the prime terminal is realized.

In addition, when incoming control of the ringing method or the ringing start time of the incoming ringer is effective, the NOTIFY message includes ringer control information or the ringing start time obtained by searching the function button management table 61 as control additional information, so that ringer ringing control is started not when the "180 ringing" message is returned but when the NOTIFY message is received. By the way, it is set by a means such as a command whether the incoming control is made effective.

Response processing, for the call incoming to the line 3000, of the IP telephone 3b that accommodates the line as an other-line is described. In this case, response operation is performed by pushing a function button corresponding to the other-line for which there is the call incoming, and the operation is reported to the call control unit 50 with the button position information via the input/output interface unit 54.

The call control unit 50 searches the function button status management table 62 using the reported button position. When the line status is "in call incoming", the call control unit 50 changes the status to "response acknowledgement waiting" and requests the multi-line control unit 51 to send a response request. When the line status is other than the "in call incoming", the operation is invalidated. The multi-line control unit 51 searches the function button management table 61 to extract address information of the prime terminal from the button position information and generates MESSAGE (response request) to send it via the SIP protocol control unit 53 and the LAN interface unit 55.

The multi-line control unit 51 of the IP telephone 3a that receives the MESSAGE (response request) performs "response request" to the call control unit 50 after returning "200 OK". The call control unit 50 extracts a prime line button position from the terminal management data 60, searches the function button status management table 62 using the extracted button position, and when it is "in call incoming", the call control unit 50 changes it to "in use" and reports "response available" to the multi-line control unit 51. In addition, if it is already "in use", "response unavailable" is reported. The multi-line control unit 51 that receives the result report for the response request returns the result to the source of the response request by carrying the result on a MESSAGE.

In addition, the multi-line control unit 51 generates a NOTIFY message for the own line status report destination address group, and send it via the SIP protocol control unit 53 and the LAN interface unit 55. The NOTIFY message includes "in use" as a line status of the line obtained by searching the function button status management table 62 using the button position information that is obtained from the multi-line management table 63 of the data management unit 56.

The call control unit 50 of the IP telephone 3b that receives the MESSAGE (response available) returns "200 OK", and after that, searches the multi-line management table 63 using the incoming number and reports extracted button position information to the call control unit 50. The call control unit 50 searches the function button status management table 62 using the button position information and changes the status to "in use".

The multi-line control unit 51 of the IP telephone 3a that receives "200 OK" for the MESSAGE (response available) reports it to the call control unit 50. The call control unit 50 sets a destination address (3100), to which "response available" is sent, into Contact and sends "200 OK" to the SIP server 1.

After that, a SIP message from the SIP server 1 and a caller does not pass through the IP telephone 3a but directly arrives at the IP telephone 3b designated by Contact. In addition, after the connection is set, RTP packets are sent and received in an End-to-End manner (between the caller and the IP telephone 3b).

When the multi-line control unit 51 of the IP telephone 3c that did not perform response operation receives the NOTIFY message, the multi-line control unit 51 of the IP telephone 3c, after returning "200 OK", searches the multi-line management table 63 using the send source number (3000) and reports extracted button position information to the call control unit 50. The call control unit 50 searches the function button status management table 62 using the button position information and changes the line status to a status reported by NOTIFY ("in use"). In addition, at the time when the INVITE method is canceled, the ringer is stopped.

### <Call originating sequence>

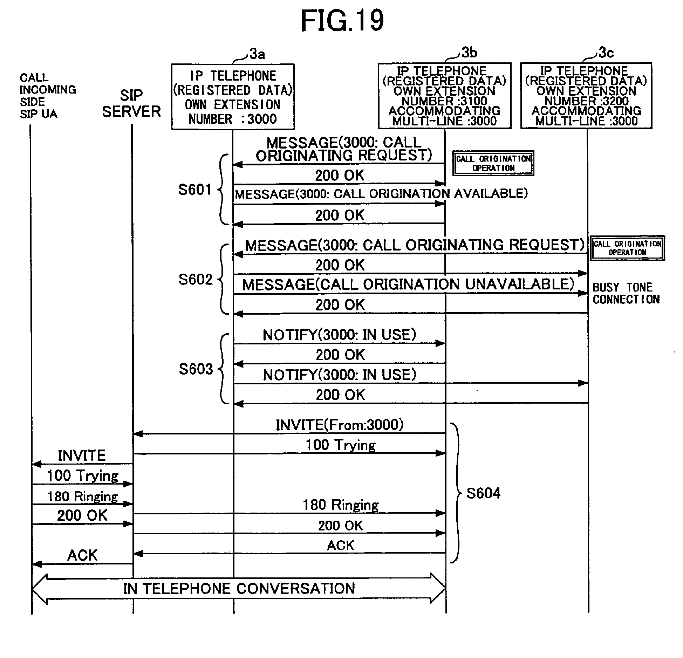

Fig.19 shows a call originating sequence example. The IP telephone 3b in which call originating operation is performed on a line "a" that is a prime line of the IP telephone 3a sends a call originating request to the IP telephone 3a that is a prime terminal. When the line status is "available", the IP telephone 3a returns "call origination available" to the source of the call originating request (IP telephone 3b in this example) (step S601). In addition, when the status of the line for which call origination is requested is not "available", the IP telephone 3a returns "call origination unavailable" (step S602). Next, the IP telephone 3a reports to the own line status report destinations that the line becomes "in use" (step S603). The IP telephone 3b that receives "call origination available" sets an address of the line "a" instead of the own address into From header of an INVITE request and sets the own address into the Contact header so as to send the INVITE request to the SIP server 1, so that the status is changed to a phone conversation status (step S604).

By the way, in Fig.19, line capturing is performed in the prime terminal by exchanging messages same as those of steps S601 and S602 so that call originating operation by the prime terminal is realized.

In addition, by waiting for elapse of a predetermined time until it is assumed that call origination is available after receiving call originating request from an other-line terminal in step S601 of Fig.19, operation becomes possible, for example, in which call origination from the prime terminal is given precedence when there are simultaneous call origination by the prime terminal and the other-line terminal.

Following is operation of the call originating sequence by the functional block shown in Fig.9.

Call originating processing, using the line 3000, from the IP telephone 3b that accommodates the line as an other-line is described. In this case, the call originating operation is performed by pushing a function button corresponding to an other-line that is desired to be used for call origination, and the operation with button position information is reported to the call control unit 50 via the input/output interface unit 54.

The call control unit 50 searches the function button status management table 62 using the reported button position. When the line status is "available", the call control unit 50 changes the status to "call origination acknowledgment waiting" and requests the multi-line control unit 51 to send a call originating request. In addition, when the line status is other than "available", the operation is invalidated.

The multi-line control unit 51 searches the function button management table 61 to extract address information of the prime terminal from button position information, generates MESSAGE (call originating request) to send it via the SIP protocol control unit 53 and the LAN interface unit 55.

The multi-line control unit 51 of the IP telephone 3a that receives the MESSAGE (call originating request) performs "call originating request" to the call control unit 50. The call control unit 50 extracts a prime line button position from the terminal management data 60, searches the function button status management table 62 using the extracted button position, and when it is "available", the call control unit 50 changes it to "in use" and reports "call origination available" to the multi-line control unit 51. In addition, if it is already "in use", "call origination unavailable" is reported. The multi-line control unit 51 that receives the result report for the originating request returns the result to the source of the originating request by carrying the result on the MESSAGE.

In addition, the multi-line control unit 51 generates a NOTIFY message for the own line status report destination address group, and send it via the SIP protocol control unit 53 and the LAN interface unit 55. The NOTIFY message includes "in use" as a line status of the line obtained by searching the function button status management table 62 using the button position information that is obtained from the multi-line management table 63 of the data management unit 56.

The call control unit 50 of the IP telephone 3b that receives the MESSAGE (response available) returns "200 OK", and after that, searches the multi-line management table 63 using the incoming number and reports extracted button position information to the call control unit 50. The call control unit 50 searches the function button status management table 62 using the button position information and changes the status to "in use", and the call control unit 50 generates an INVITE request message and sends it via the SIP protocol control unit 53 and the LAN interface unit 55. At this time, the address (3000) of the IP telephone 3a that is the prime terminal of the use line is designated in From line of the INVITE request massage, and the own address (3100) is designated in the Contact address, so that a SIP message from the SIP server 1 and a caller after that does not pass through the IP telephone 3a but is directly received by the IP telephone 3b designated by Contact. In addition, after the connection is set, RTP packets are sent and received in an End-to-End manner (between the caller and the IP telephone 3b).

When the multi-line control unit 51 of the IP telephone 3c that did not perform call originating operation receives the NOTIFY message, the multi-line control unit 51 of the IP telephone 3c, after returning "200 OK", searches the multi-line management table 63 using the send source number (3000) and reports extracted button position information to the call control unit 50. The call control unit 50 searches the function button status management table 62 using the button position information and changes the line status to a status reported by NOTIFY ("in use").

### <Line holding and response sequence>

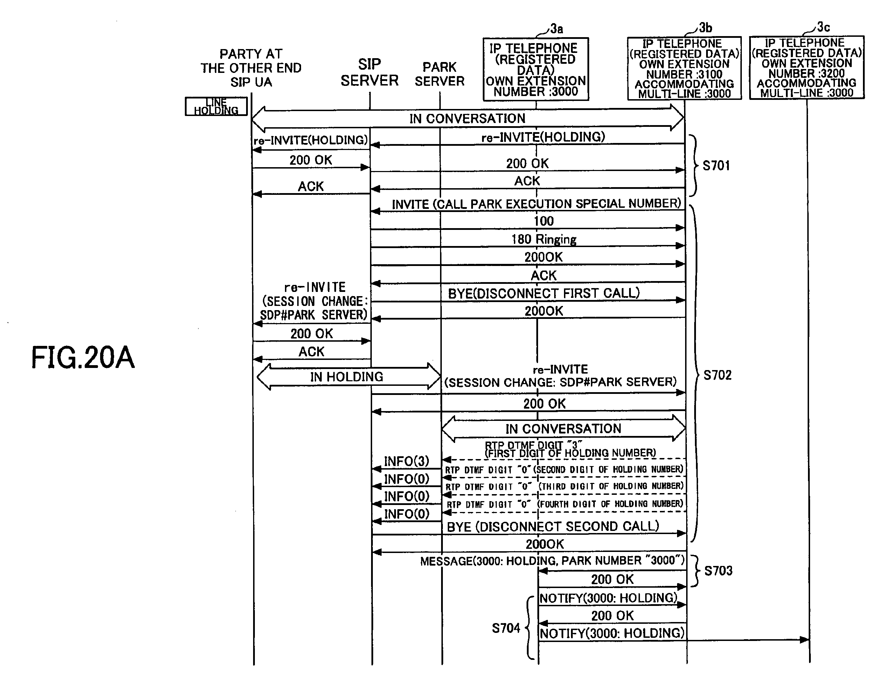

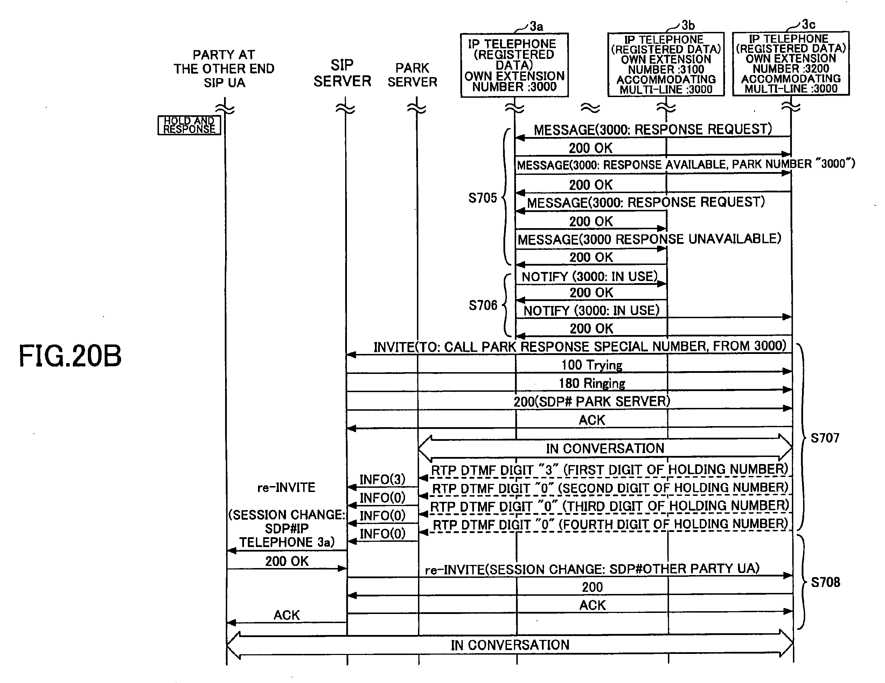

Fig.20A and Fig.20B are diagrams showing line holding and response sequence example. The line holding and response processing is realized by a general call park service processing using SIP. The IP telephone 3b that is in conversation is given a call park number ("park number") when performing line holding operation, and the service is executed by dialing "response special number" + "park number" (steps S701 and S702). The call park number is a number uniquely assigned to a holding call in the system, and a number of a line that is an object of holding is used in Figs.20A and 20B. The IP telephone 3b that performs line holding reports to the IP telephone 3a the "park number" and the fact that the line is held (step S703). The IP telephone 3a reports "in holding" status and "park number" to the own line status report destinations (step S704). The IP telephone 3c that performs response operation for the line holding sends a response request to the IP telephone 3a. The IP telephone 3a returns "response available" and "park number" to the response terminal (step S705). In addition, the IP telephone 3a reports to the own line status report destination that the line status becomes "in use" (step S706). The IP telephone 3c that receives "response available" sets a call park response special number to a To header and sets an address of the line "a" instead of the own address to the From header so as to send the INVITE request to the SIP server 1 (steps S707 and S708).

Following is operation of the line holding and response sequence according to the function block shown in Fig.9.

Line holding processing is described when the IP telephone 3b that accommodates the line 3000 as an other-line is in a state of phone conversation using the line 3000. In this case, the line holding operation is performed by pushing a function button corresponding to the other-line that is in use, and the operation is reported to the call control unit 50 via the input/output interface unit 54 with the button position information.

The call control unit 50 searches the function button status management table 62 using the reported button position. When the line status is "in use", the call control unit 50 changes it to "requesting holding", generates a re-INVITE message for the SIP server 1, and sends it via the SIP protocol control unit 53 and the LAN interface unit 55.

Next, the call control unit 50 of the IP telephone 3b extracts a call park execution special number from the terminal management data 60 and reports it to the SIP server 1 using an INVITE method. When the INVITE method ends, the SIP server 1 connects each of the IP telephone 3b and the other side SIP user agent to the park server 7, and ends connection between the IP telephone 3b and the other side SIP user agent.

The call control unit 50 of the IP telephone 3b that is in a state of phone conversation with the park server 7 reports the use line number (3000) as a park number to the park server 7, and performs "park notification" to the multi-line control unit 51. The multi-line control unit 51 generates a MESSAGE (park notification) for the IP telephone 3a that is a prime terminal of the line 3000 to send it via the SIP protocol control unit 53 and the LAN interface unit 55.

The multi-line control unit 51 of the IP telephone 3a that receives the MESSAGE (park notification) returns "200 OK". After that, the multi-line control unit 51 performs "park notification" to the call control unit 50. The call control unit 50 extracts the prime line button position from the terminal management data 60, searches the function button status management table 62 using the extracted button position. When it is "in use", the call control unit 50 changes it to "in holding", and stores the received park number into the function button status management table 62. After that, the multi-line control unit 51 generates a NOTIFY message for the own line status report destination address group, and send it via the SIP protocol control unit 53 and the LAN interface unit 55. The NOTIFY message includes "in holding" as a line status of the line obtained by searching the function button status management table 62 using the button position information obtained from the multi-line management table 63 of the data management unit 56.

Processing is described when the IP telephone 3c that accommodates the line 3000 as an other-line responds on the line 3000 that is held by the IP telephone 3b. In this case, line holding and response is performed by pushing a function button corresponding to the other-line that is in holding, and the operation is reported with the button position information to the call control unit 50 via the input/output interface unit 54.

The call control unit 50 searches the function button status management table 62 using the reported button position. When the line status is "in holding", the call control unit 50 changes the status to "holding response acknowledgement waiting" and requests the multi-line control unit 51 to send a response request. When the line status is other than the "in holding", the operation is invalidated.

The multi-line control unit 51 searches the function button management table 61 to extract address information of the prime terminal from the button position information and generates a MESSAGE (response request) to send it via the SIP protocol control unit 53 and the LAN interface unit 55.

The multi-line control unit 51 of the IP telephone 3a that receives the MESSAGE (response request) performs "response request" to the call control unit 50. The call control unit 50 extracts a prime line button position from the terminal management data 60, searches the function button status management table 62 using the extracted button position, and when it is "in holding", the call control unit 50 changes it to "in use" and reports "response available" to the multi-line control unit 51. In addition, if it is already "in use", "response unavailable" is reported. The multi-line control unit 51 that receives the result report for the response request returns the result and the park number to the source of the response request by carrying the result on the MESSAGE. In addition, the multi-line control unit 51 generates a NOTIFY message for the own line status report destination address group, and send it via the SIP protocol control unit 53 and the LAN interface unit 55. The NOTIFY message includes "in use" as a line status of the line obtained by searching the function button status management table 62 using the button position information that is obtained from the multi-line management table 63 of the data management unit 56.

The call control unit 50 of the IP telephone 3c that receives the MESSAGE (response available) returns "200 OK", and after that, searches the multi-line management table 63 using the incoming number and reports extracted button position information to the call control unit 50. The call control unit 50 searches the function button status management table 62 using the button position information and changes the status to "in use". Next, the call control unit 50 of the IP telephone 3c extracts the call park response special number from the terminal management data 60 and reports it to the SIP server 1 using an INVITE method. The SIP server 1 forms a connection between the IP telephone 3c and the park server 7 by the INVITE method.

The call control unit 50 of the IP telephone 3c that becomes in a status of phone conversation with the park server 7 reports to the park server 7 a number, as a park number, reported from the IP telephone 3a by the MESSAGE.

The park server 7 to which the park number is reported executes park response processing so that a connection between the IP telephone 3c and the other end SIP user agent.

### <General operation>

Line information of the IP telephone 3a is registered in the IP telephones 3b and 3c beforehand by a means such as a command and the like.

When there is an incoming call to the IP telephone 3a, a line button of the IP telephone 3a registered in each of the IP telephone 3b and 3c indicates call incoming, and a call incoming ringer rings. When the IP telephone 3b responds by pushing the line button of the IP telephone 3a, the ringers of the IP telephones 3b and 3c stops and the line button of the IP telephone 3a in each of the IP telephones 3a and 3c becomes in use. When a ringer ringing start time is set, the ringer rings after time-out.

In the above-mentioned operation, when the line button of the IP telephone 3a is pushed in the IP telephone 3c at the same time when the line button of the IP telephone 3a is pushed in the IP telephone 3b, the IP telephone 3c becomes in a status of response unavailable so that busy tone is heard.

When the IP telephone 3b originates a call by pushing the line button of the IP telephone 3a, a line button of the IP telephone 3a in each of the IP telephones 3a and 3c becomes in use. When the IP telephone 3b is disconnected, the button of the IP telephone 3a in each of the IP button telephones 3a and 3b becomes available.

In the above-mentioned operation, when call origination occurs by pushing the line button of the IP telephone 3a in the IP telephone 3c at the same time when call origination occurs by pushing the line button of the IP telephone 3a in the IP telephone 3b, call origination becomes unavailable and busy tone is heard.

Line holding is performed by pushing the line button of the IP telephone 3a when the IP telephone 3a is in conversation. The other end terminal of the conversation hears a holding tone. The line button of the IP telephone 3a in each of the IP telephones 3a, 3b and 3c becomes in a holding state. When the line button of the IP telephone 3a is pushed in the IP telephone 3b, the IP telephone 3b becomes in phone conversation with the other end terminal that is in a holding state. The line button of the IP telephone 3a in each of the IP telephones 3a, 3b and 3c becomes in use.

### <Effects of embodiment>

There are following effects in the above-mentioned embodiments.

First, since the multi-line service can be realized using proprietary message/procedure only between telephone apparatuses such as IP telephones and the like, system construction can be performed using a connection management server such as a SIP server (standard SIP server) supporting only RFC/internet drafts related to SIP. In addition, by using the standard SIP server and the like, SIP user agents other than ones used for the multi-line service can be arranged without regard for connectivity to the server.

Second, since the multi-line service can be realized using proprietary message/procedure only between telephone apparatuses, a multi-line system can be provided to a user having an existing SIP system and the like and to a user using an IP Centrex and the like only by preparing telephone apparatuses, to which functions of the present invention is reflected, the number of which is the same as the number of participants of the multi-line service. In addition, since the telephone apparatuses forming the multi-line can connect each other across networks, multi-lines that connect among a plurality of sites can be easily formed.

Third, since the standard SIP server etc. can be used, development cost and introduction cost can be decreased. In addition, since the multi-line can be added or removed by performing settings only in the terminal side without center side settings, maintenance cost can be decreased.

Fourth, since development of the SIP server and the like is unnecessary, software size to be realized becomes small.

Fifth, since the sequence between the connection management server and the telephone apparatus is simple, traffic load between WANs can be decreased. In addition, since multi-line control processing is distributed to prime line accommodating terminals in this scheme, the multi-line can be increased without being affected by the capability of the connection management server.

As mentioned above, the present invention has been described using the preferred embodiments of the present invention. Although the present invention has been described showing particular concrete examples, it is apparent that variations and modifications may be made to these concrete examples without departing from the scope of the invention defined by the claims. That is, the present invention should not be interpreted to be limited to the details of the concrete examples and the attached drawings.

## Claims

1. A telephone apparatus for performing a telephone call using a predetermined communication protocol and a connection protocol, comprising:
means for mutually reporting a line status using a proprietary interface different from the connection protocol between the telephone apparatus and another telephone apparatus forming a multi-line group.

2. The telephone apparatus as claimed in claim 1, wherein the communication protocol is an internet protocol, and the connection protocol is a session initiation protocol.

3. The telephone apparatus as claimed in claim 1, comprising:
own-line status report means for reporting an own-line status to the another telephone apparatus; and
other-line status request means for requesting the another telephone apparatus to report a line status.

4. The telephone apparatus as claimed in claim 1, wherein, when there is a line status report request from the another telephone apparatus voluntarily and periodically, the own-line status report means dynamically generates or refreshes a report destination list for reporting an own-line status.

5. The telephone apparatus as claimed in claim 1, wherein the own-line status report means statically holds a report destination list for reporting an own-line status, and when there is a line status report request from the another telephone apparatus voluntarily and periodically, the own-line status report means dynamically corrects the line status report list.

6. The telephone apparatus as claimed in claim 1, wherein the other-line status request means controls active/inactive of a line status report request to the another telephone apparatus to change a configuration of the multi-line group.

7. The telephone apparatus as claimed in claim 1, wherein the own-line status report means holds an upper limit value of a number of the report destinations and decides that reporting is unavailable for a line status report request equal to or greater than the upper limit value.

8. The telephone apparatus as claimed in claim 1, wherein the other-line status request means reports authentication information arranged between the telephone apparatus and the another telephone apparatus when performing a line status report request, and
the own-line status report means authenticates a valid telephone apparatus using the authentication information included in the line status report request from the another telephone apparatus.

9. The telephone apparatus as claimed in claim 1, wherein, when receiving a call incoming request from a connection management server, the own-line status report means sends a call incoming request to the another telephone apparatus that requests the line status report so that response from the another telephone apparatus to the incoming call on the own line is available.

10. The telephone apparatus as claimed in claim 9, wherein, when there are two or more responses from other telephone apparatuses, the own-line status report means reports response available to one telephone apparatus.

11. The telephone apparatus as claimed in claim 1, wherein the own-line status report means receives a request for call origination using the own line from the another telephone apparatus.

12. The telephone apparatus as claimed in claim 11, wherein, when there are two or more call originating requests from other telephone apparatuses, the own-line status report means reports call origination available to only one telephone apparatus.

13. The telephone apparatus as claimed in claim 1, wherein the own-line status report means makes a line to be in a holding status according to holding operation in a telephone conversation, sends a holding request to the another telephone apparatus that requests a line status report so that response from the another telephone apparatus becomes available.

14. The telephone apparatus as claimed in claim 1, wherein the own-line status report means controls a ringing method of a call incoming ringer for each destination terminal for reporting a line status.

15. The telephone apparatus as claimed in claim 1, wherein the own-line report means sets a ringer ringing start time to additional information of the line status to control the ringer ringing start time for each of report destination terminals.

16. The telephone apparatus as claimed in claim 1, wherein the own-line status report means controls call incoming report timing for each destination terminal for reporting a line status.

17. The telephone apparatus as claimed in claim 1, wherein the own-line status report means controls call origination available report timing for each destination for reporting a line status.
